# DEMANDE DE BREVET EUROPEEN

(11) **EP 0 773 513 A1**
(43) Date de publication de la demande: **14.05.1997**
(21) Numéro de dépôt: 96402359.2
(22) Date de dépôt: 06.11.1996
(51) Int. Cl.: G06T 7/00, G06K 15/02

(54) **Procédé et dispositif de contrôle la qualité d'impression**

(30) Priorité: 08.11.1995 FR 9513214
(71) Demandeur: IMAJE S.A., F-26501 Bourg les Valence Cedex (FR)
(72) Inventeur: Farlotti, Laurent, 07500 Guilherand-Granges (FR); Michallon, Jannick, 07130 St. Peray (FR)
(74) Mandataire: Dubois-Chabert, Guy

(57) **Abrégé**

L'invention concerne un procédé de contrôle de la qualité et de vérification de la conformité de l'impression d'une imprimante sur au moins un objet en déplacement comprenant les étapes suivantes :
- impression sur chaque objet en mouvement d'au moins un message ;
- transmission en continu d'une description de chaque message imprimé ;
- construction d'une image de référence dudit message imprimé ;
- enregistrement de l'image réelle du message imprimé ;
- comparaison de l'image réelle à l'image de référence ;
- transmission en continu du résultat de la comparaison ;
- décision d'éventuelles actions correctives en fonction dudit résultats.

L'invention concerne également un dispositif de mise en oeuvre de ce procédé.

## Description

### Domaine technique

L'invention concerne un procédé de contrôle des caractères imprimés par une imprimante, notamment à jet d'encre, et un dispositif de mise en oeuvre de ce procédé, dans une installation d'impression industrielle.

### Etat de la technique antérieure

Les applications d'imprimantes à jet d'encre se multiplient régulièrement, dans le domaine du marquage industriel. On peut citer à titre purement illustratif l'impression de dates de fraîcheur, ou de numéros de lot, sur les produits agro-alimentaires. Le bon fonctionnement de ces imprimantes est régi par un certain nombre de paramètres qui doivent être parfaitement maîtrisés si l'on veut obtenir une qualité d'impression irréprochable. Nonobstant les nombreux perfectionnements introduits ces dernières années dans de telles imprimantes, celles-ci ne sont pas à l'abri d'une dérive de l'un ou l'autre des paramètres régissant leur fonctionnement ; ceci peut se traduire par une dégradation de la qualité d'écriture. Dans la plupart des cas, cette dégradation présente une typologie en rapport avec le paramètre défaillant. Par exemple, l'absence d'un impact de gouttes sur le support à imprimer peut signifier que la tête a besoin d'un nettoyage. De même, à un défaut de positionnement des gouttes peut correspondre une vitesse anormale d'éjection des gouttes, une mauvaise distance d'impression, ou une vitesse incorrecte du déplacement relatif de la tête et de l'objet à imprimer. D'autres défauts sont imputables aux moyens de convoyage de l'objet à imprimer : glissements, vibrations, collisions, etc... Les chaînes de fabrication ou de conditionnement étant de plus en plus automatisées, la permanence de la qualité d'impression apparaît comme tout à fait primordiale. La fonction de marquage intervenant très souvent en fin de chaîne de production, aussi tout marquage défectueux se traduit par des pertes inacceptables.

La demande de brevet FR-A-87 16446 décrit un procédé de contrôle de la qualité d'impression d'une imprimante à jet d'encre, dans lequel l'imprimante imprime, à intervalles périodiques, une trame de contrôle spécifique. Cette trame est lue par un capteur associé et comparée à une trame de référence. Cette trame est choisie pour être représentative des caractères les plus difficiles à imprimer. L'exploitation des résultats permet de vérifier que l'impression de la trame de contrôle est correcte, ou d'alerter un opérateur en cas de dérive. Ce procédé est toutefois insuffisant : il ne permet pas, en effet, de vérifier la conformité du marquage. De plus en plus, le besoin de vérifier le message imprimé apparaît, que ce soit sous la pression croissante de la réglementation qui impose un marquage correct et lisible, ou de par la volonté du fabricant qui cherche à minimiser les risques d'une mauvaise interprétation du message, ou tout simplement à en garantir la conformité avec des standards graphiques internes ou externes.

Des systèmes de vision qui permettent de contrôler un message imprimé sont couramment proposés.
Certains systèmes font appel à des capteurs et à des algorithmes de traitement d'image capables de donner une information sur la qualité du message après une phase d'apprentissage, en comparant par exemple la position et le contraste d'une image en cours avec ceux d'une image de référence. Ces systèmes ont l'inconvénient de nécessiter une nouvelle phase d'apprentissage chaque fois que le contenu du message, et donc l'image imprimée correspondante, varie sensiblement.

D'autres systèmes plus sophistiqués sont capables de reconnaître chaque caractère d'un message imprimé dans des fontes, ou jeux de caractères, connus à l'avance ; mais ces systèmes nécessitent l'apprentissage préalable d'images imprimées correctement et une capacité mémoire importante pour conserver toutes les images de référence correctes.

Pour pallier ces différents inconvénients des dispositifs de l'art antérieur, la présente invention a pour objet un procédé de contrôle de caractères imprimés et un dispositif de mise en oeuvre de ce procédé, capables de contrôler en continu la conformité des messages imprimés.

### Exposé de l'invention

La présente invention concerne un procédé de contrôle de la qualité et de vérification de la conformité de l'impression d'une imprimante, qui peut être une imprimante à jet d'encre, sur au moins un objet en déplacement, caractérisé en ce qu'il comprend les étapes suivantes :
- impression sur chaque objet en mouvement d'au moins un message ;
- transmission en continu d'une description de chaque message imprimé ;
- construction d'une image de référence dudit message imprimé ;
- enregistrement d'une image réelle du message imprimé ;
- comparaison de l'image réelle à l'image de référence ;
- transmission en continu du résultat de la comparaison ;
- décision d'éventuelles actions correctives en fonction dudit résultat.

La comparaison entre l'image réelle d'un message imprimé et l'image de référence fournit des informations sur les paramètres régissant la qualité d'impression, de manière à décider d'actions correctives.

Avantageusement l'enregistrement de l'image réelle du message imprimé se fait après un délai calculé suivant l'instant de l'impression ou à réception d'un signal de synchronisation fourni par l'imprimante, ou à réception d'un signal fourni par un capteur approprié, ou à partir d'une analyse en continu de l'image réelle du (ou des) objet(s) imprimé(s), si certaines conditions déterminées à l'avance sont remplies.

Avantageusement l'imprimante imprime des messages sous forme graphique binaire ou "bitmap".

Le procédé de l'invention consiste à :
- associer étroitement une imprimante et un système de contrôle ;
- faire transmettre en continu par l'imprimante une description du message imprimé ;
- construire une image de référence du message à partir de la description ;
- enregistrer l'image réelle du message imprimé au moment opportun ;
- comparer l'image réelle enregistrée à l'image de référence ;
- fournir immédiatement un résultat de cette comparaison.

L'invention concerne également un dispositif de mise en oeuvre de ce procédé, caractérisé en ce qu'il comprend une imprimante apte à déposer, par l'intermédiaire de sa tête d'impression, un marquage sur au moins un objet entraîné par un convoyeur, une cellule de détection et un codeur tachymétrique connectés à un interface de l'imprimante pour fournir respectivement des informations sur la présence de chaque objet à imprimer et sur la vitesse du convoyeur, de manière à déclencher l'impression à un instant tel que le marquage est correctement positionné sur chaque l'objet, et un système de contrôle.

Avantageusement le système de contrôle est constitué d'une carte de traitement d'image, ou carte vision d'un capteur (ou caméra), et d'un moniteur utilisé dans les phases d'installation et de mise au point du système ; de manière à établir les meilleures conditions d'éclairage possibles pour l'enregistrement des messages imprimés. Ce système de contrôle peut également être utilisé pour contrôler ces conditions en cours de fabrication.

L'imprimante et le système de contrôle forment avantageusement un ensemble intégré aux plans matériel et logiciel.

Le dispositif de l'invention peut être complété par un terminal associé à l'imprimante qui sert notamment à éditer des messages, à effectuer des opérations de maintenance et à entrer les paramètres initiaux de l'imprimante et du système de contrôle.

Un des avantages de l'invention est que chaque message peut être représenté sous forme binaire et que l'image de référence correspondante peut être reconstruite par le système de contrôle ; il n'y a donc plus besoin d'effectuer au préalable un apprentissage de ladite image de référence. De plus, le message à imprimer peut varier d'un objet à l'autre de façon continue, dans la mesure où l'électronique de transmission et de traitement est suffisamment performante pour prendre en compte ces variations. De plus, la forme binaire étant utilisée pour décrire les caractères dans les processus internes de l'imprimante, la description des messages à contrôler peut être transmise dans un délai très court suivant l'impression.

Un autre avantage de l'invention est de maintenir un espace minimal entre le lieu de l'impression et celui de la vérification et ce faisant, ce qui permet de minimiser le nombre de messages en cours, c'est-à-dire déjà imprimés et pas encore contrôlés. La capacité mémoire nécessaire pour contenir ces messages en cours peut être diminuée en conséquence.

L'invention s'applique à toute installation de marquage industriel mettant en oeuvre la technique du jet d'encre, mais peut également s'appliquer à d'autres techniques d'impression dans la mesure où le message imprimé peut être décrit sous forme graphique binaire.

### Brève description des dessins

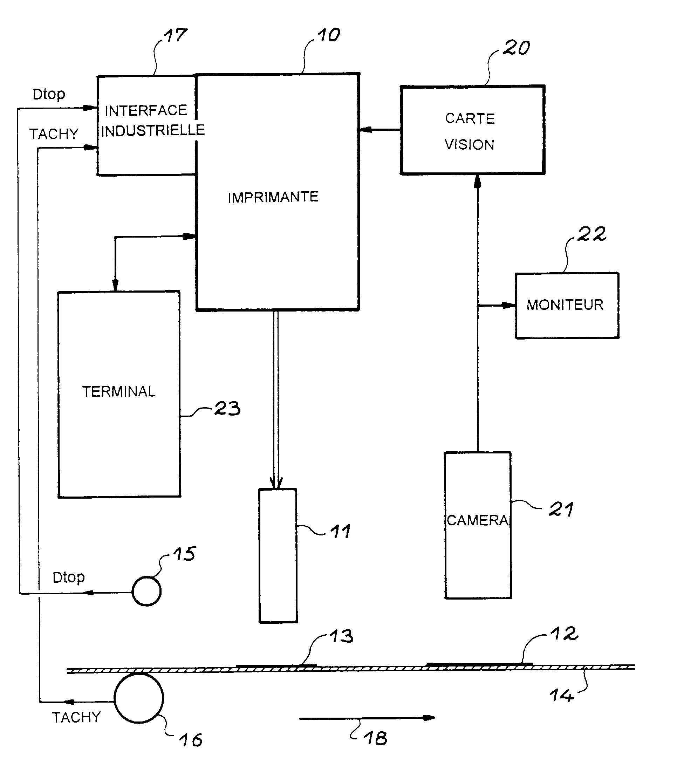

- La figure 1 illustre schématiquement le dispositif de mise en oeuvre du procédé de l'invention.

### Exposé détaillé de modes de réalisations

Dans le cas d'une installation de marquage industriel, représentée sur la figure 1, une imprimante 10 dépose par l'intermédiaire de sa tête d'impression 11 un marquage sur des objets 12, 13 entraînés par un convoyeur 14 (direction de déplacement 18). Une cellule de détection 15 et un codeur tachymétrique 16 connectés à un interface 17 industriel de l'imprimante 10 fournissent respectivement des informations sur la présence des objets à imprimer et sur la vitesse du convoyeur. Ces informations permettent de déclencher l'impression à un instant tel que le marquage est correctement positionné sur chaque objet.

Ces informations peuvent également être utilisées par un système de contrôle, constitué par exemple d'une carte de traitement d'image ou carte vision 20, d'un capteur (ou caméra) 21 et d'un moniteur 22. Le moniteur 22 est utilisé dans les phases d'installation et de mise au point du système, pour établir les meilleures conditions d'éclairage possibles pour l'enregistrement des messages imprimés. Il peut également être utilisé pour contrôler ces conditions en cours de fabrication. Dans l'exemple présenté, l'installation est complétée par un terminal 23 d'entrée-sortie associé à l'imprimante 10. Ce terminal 23 sert notamment à éditer des messages, à effectuer des opérations de maintenance et à entrer les paramètres initiaux de l'imprimante et du système de contrôle.

Quand la cellule 15 détecte un objet à imprimer 12 ou 13, elle émet un signal Dtop à destination de l'imprimante 10. Celle-ci peut également recevoir une information Tachy de la vitesse du convoyeur 14 fournie par le codeur tachymétrique 16. L'impression est effectuée au moment où l'objet à imprimer passe sous la tête 11. L'imprimante 10 fournit alors à la carte vision 20 une description du message imprimé. La carte vision 20 construit une image de référence à partir de cette description. Sur un signal fourni par l'imprimante 10, tout en tenant compte de la distance entre la tête 11 et la caméra 21 et de la vitesse du convoyeur 14, la caméra 21 enregistre l'image réellement imprimée. Cette image est comparée à l'image de référence par la carte vision 20. Le résultat de cette comparaison est transmis à l'imprimante. En fonction de ce résultat, l'imprimante transmet une information à l'opérateur par l'intermédiaire du terminal 11, ou à un système de supervision externe (non représenté) par l'intermédiaire de son interface industriel 17.

Dans un autre exemple de réalisation, l'enregistrement est déclenché par une seconde cellule de détection (non représentée). Le déclenchement de l'enregistrement peut également intervenir à partir d'une analyse en continu de l'image du convoyeur 14 si certaines conditions déterminées à l'avance sont remplies, par exemple l'apparition d'un objet dans le champ de la caméra 21.

Quand la vitesse du convoyeur 14 est considérée comme fixée, elle peut être entrée dans l'imprimante par l'intermédiaire du terminal 11. Dans ce cas, le codeur tachymétrique 16 n'est pas utilisé et l'imprimante génère elle-même les signaux de synchronisation nécessaires.

Dans le cas où le marquage est déposé sur non pas plusieurs mais sur un seul objet en mouvement, l'imprimante 10 génère elle-même les signaux de synchronisation utiles pour l'impression et la vérification.

Selon une caractéristique de l'invention, le message imprimé est sous une forme graphique binaire, dite également forme "raster" ou "bitmap". Dans cette forme, le message est considéré comme une succession horizontale de trames verticales comportant des points à imprimer ou des espaces vides. Chaque trame peut être représentée par une succession de bits égaux à un pour un point à imprimer et à zéro pour un espace vide.

Cette représentation se prête bien à des messages imprimés par jet d'encre dans la mesure où chaque point va également correspondre à une (ou plusieurs) gouttes d'encre. Chaque caractère possède donc déjà une représentation sous forme binaire qui est utilisée dans les procédures internes de l'imprimante. Le message à imprimer peut donc être transmis au système de contrôle et pris en compte dans un délai très court suivant l'impression.

Selon une autre caractéristique de l'invention, le système de contrôle est capable de mesurer des écarts entre la position théorique des points dans l'image de référence et la position réelle des points dans l'image imprimée, et également de détecter l'absence de points. Ces écarts donnent des informations sur la dérive éventuelle des paramètres régissant l'impression, comme décrit dans la demande de brevet FR-A-87 16446.

En fonction des écarts constatés entre l'image imprimée et l'image de référence, le système de contrôle peut émettre des signaux à destination de l'imprimante, ou d'un système de supervision externe, qui peuvent, suivant le cas, prendre différentes décisions. Ils peuvent, notamment, à titre d'exemple :
- alerter un opérateur dans le cas d'une dérive nécessitant une opération de maintenance ;
- mettre à jour des statistiques sur la qualité de l'impression réalisée ;
- écarter un objet au marquage incorrect ou illisible.

Afin de réduire les délais de transmission et de traitement des informations et de minimiser les coûts de réalisation de l'ensemble, l'imprimante et le système de contrôle peuvent être associés aux plans matériel et logiciel ; ils forment alors un système intégré.

## Revendications

1. Procédé de contrôle des caractères imprimés par une imprimante sur au moins un objet en déplacement, caractérisé en ce qu'il comprend les étapes suivantes :
- impression sur chaque objet en mouvement d'au moins un message ;
- transmission en continu d'une description de chaque message imprimé ;
- construction d'une image de référence dudit message imprimé ;
- enregistrement de l'image réelle du message imprimé ;
- comparaison de l'image réelle à l'image de référence ;
- transmission en continu du résultat de la comparaison ;
- décision d'éventuelles actions correctives en fonction dudit résultat.

2. Procédé selon la revendication 1, caractérisé en ce que l'enregistrement de l'image réelle du message imprimé se fait après un délai déterminé.

3. Procédé selon la revendication 2, caractérisé en ce que le délai est calculé suivant l'instant de l'impression.

4. Procédé selon la revendication 2, caractérisé en ce que le délai est calculé à réception d'un signal de synchronisation fourni par l'imprimante.

5. Procédé selon la revendication 2, caractérisé en ce que le délai est calculé à réception d'un signal fourni par un capteur approprié.

6. Procédé selon la revendication 2, caractérisé en ce que le délai est calculé à partir d'une analyse en continu de l'image réelle du (ou des) objet(s) imprimé(s) si certaines conditions déterminées à l'avance sont remplies.

7. Procédé selon l'une quelconque des revendications précédentes, caractérisé en ce que les messages sont imprimés sous forme graphique binaire.

8. Procédé suivant l'une quelconque des revendications 1 à 7, caractérisé en ce que la comparaison entre l'image réelle d'un message imprimé et l'image de référence fournit des informations sur les paramètres régissant la qualité d'impression, de manière à décider d'éventuelles actions correctives.

9. Procédé selon l'une quelconque des revendications 1 à 8, caractérisé en ce que l'imprimante est une imprimante à jet d'encre.

10. Dispositif de mise en oeuvre du procédé selon l'une quelconque des revendications 1 à 9, caractérisé en ce qu'il comprend une imprimante (10) et un système de contrôle.

11. Dispositif selon la revendication 10, caractérisé en ce que le système de contrôle est constitué d'une carte de traitement d'image (20), d'un capteur (21), et accessoirement d'un moniteur (22).

12. Dispositif suivant l'une quelconque des revendications 10 et 11, caractérisé en ce que l'imprimante et le système de contrôle forment un ensemble intégré aux plans matériel et logiciel.
